# EUROPÄISCHE PATENTSCHRIFT

(11) **EP 2 554 956 B1**
(45) Veröffentlichungstag und Bekanntmachung des Hinweises auf die Patenterteilung: **29.07.2020**
(21) Anmeldenummer: 11176609.3
(22) Anmeldetag: 04.08.2011
(51) Int. Cl.: G01F 23/28, G01S 7/41, G01S 13/70, G01S 13/88

(54) **Tracking unter Berücksichtigung der Mobilität**
Tracking taking mobility into consideration
Suivi en fonction de la mobilité

(43) Veröffentlichungstag der Anmeldung: 06.02.2013
(73) Patentinhaber: VEGA Grieshaber KG, 77709 Wolfach (DE)
(72) Erfinder: Welle, Roland, 77709 Oberwolfach (DE); Hoferer, Christian, 77654 Offenburg (DE)
(74) Vertreter: Maiwald Patent- und Rechtsanwaltsgesellschaft mbH

(56) Entgegenhaltungen:
- EP-A1- 2 148 219
- EP-A1- 2 366 983
- EP-A2- 1 489 393
- WO-A1-2004/010093
- DE-A1-102004 052 110
- US-A1- 2006 137 446

## Beschreibung

### Gebiet der Erfindung

Die Erfindung betrifft die Füllstandmessung. Insbesondere betrifft die Erfindung ein Füllstandmessgerät zur Bestimmung von Mobilitätswerten von Echos einer Echokurve und zur Durchführung eines Tracking-Verfahrens unter Berücksichtigung zumindest eines der Mobilitätswerte, die Verwendung eines derartigen Füllstandmessgeräts zur Trennschichtmessung, ein Verfahren, ein Programmelement und ein computerlesbares Medium.

### Technischer Hintergrund

Bei den nach dem FMCW (Frequency Modulated Continuous Wave) oder Impuls-Laufzeitverfahren arbeitenden Füllstandsensoren werden elektromagnetische oder akustische Wellen in Richtung einer Füllgutoberfläche emittiert. Daran anschließend zeichnet ein Sensor die vom Füllgut, den Behältereinbauten und dem Behälter selbst reflektierten Echosignale auf und leitet daraus die Lage oder Position einer Oberfläche zumindest eines der im Behälter befindlichen Füllgüter ab.

Bei der Verwendung akustischer oder optischer Wellen breitet sich das vom Füllstandmessgerät erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht als auch eine Ausbreitung im Inneren eines Hohlleiters, welcher die Radarwellen vom Füllstandmessgerät zum Medium führt. Bei Geräten nach dem Prinzip der geführten Mikrowelle werden die hochfrequenten Signale entlang eines Wellenleiters zum Medium hin geführt.

An der Oberfläche des zu vermessenden Mediums oder Füllguts werden die ankommenden Signale reflektiert und gelangen nach entsprechender Laufzeit wieder zurück zum Füllstandmessgerät. Das Füllstandmessgerät empfängt die an verschiedenen Stellen reflektierten Signale und bestimmt daraus die Distanz zum Füllgut.

Die bestimmte Distanz zum Füllgut wird nach außen hin bereitgestellt. Die Bereitstellung kann in analoger Form, beispielsweise mittels einer 4...20mA-Schnittstelle, oder auch in digitaler Form, beispielsweise mittels Feldbusprotokoll, realisiert werden.

Zur Gruppierung von Echos zeitlich aufeinander folgender Echokurven, die auf identische Reflexionsstellen zurückzuführen sind, kann ein Tracking-Verfahren durchgeführt werden. Oft gestaltet sich die richtige Zuordnung eines Echos zu einem bestimmten Track als schwierig.

EP 2 148 219 A1 beschreibt die Prozessierung von Puls-Echo-Messsignalen, indem Tracks einer Mehrzahl von Echos gebildet werden und diese Tracks dann durch einen Rekursiv-Filter, beispielsweise einen Kalman-Filter, überwacht werden. Für jeden Track wird eine Geschwindigkeit geschätzt und die Position des nächsten Echos des Tracks vorhergesagt.

### Zusammenfassung der Erfindung

Es ist eine Aufgabe der Erfindung, die richtige Zuordnung eines Echos zu einem Track zu erleichtern.

Es sind ein Füllstandmessgerät, eine Verwendung, ein Verfahren, ein Programmelement und ein computerlesbares Medium gemäß den Merkmalen der unabhängigen Patentansprüche angegeben. Weiterbildungen der Erfindung ergeben sich aus den Unteransprüchen und der folgenden Beschreibung.

Gemäß einem ersten Aspekt der Erfindung ist ein Füllstandmessgerät zur Bestimmung von Mobilitätswerten von Echos einer Echokurve und zur Durchführung eines Tracking-Verfahrens unter Berücksichtigung zumindest eines der Mobilitätswerte angegeben. Das Füllstandmessgerät weist eine Recheneinheit auf, welche beispielsweise einen oder mehrere Mikroprozessoren umfasst und welche zur Bestimmung eines ersten Mobilitätswertes eines ersten Echos einer ersten Echokurve unter Berücksichtigung einer Positionsverschiebung des ersten Echos und einer Positionsverschiebung eines weiteren Echos der ersten Echokurve ausgeführt ist. Weiterhin führt die Recheneinheit ein Tracking-Verfahren zur Gruppierung von Echos zeitlich aufeinander folgender Echokurven aus, die auf identische Reflexionsstellen zurückzuführen sind.

Weiterhin ist die Recheneinheit ausgeführt, ein zweites Echo einer nach der ersten Echokurve ertassten zweiten Echokurve unter Berücksichtigung zumindest des ersten Mobilitätswertes einem bestimmten Track zuzuordnen.

In anderen Worten ist das Füllstandmessgerät in der Lage, ein modifiziertes Tracking-Verfahren durchzuführen, bei dem berücksichtigt werden kann. ob sich ein bestimmtes Echo in der Vergangenheit (beispielsweise während einer früheren Messung oder zwischen der früheren und einer vor dieser früheren Messung stattgefundenen Messung) bewegt hat und ob sich darüber hinaus auch noch ein weiteres Echo bewegt hat.

In anderen Worten können bei der Zuordnung eines bestimmten Echos (einer aktuell gemessenen Echokurve) zu einem bestimmten Track Informationen darüber berücksichtigt werden, ob sich das Echo dieses Tracks bei der vorhergehenden Messung oder bei den vorhergehenden Messungen bewegt hat. Weiterhin wird berücksichtigt, ob sich ein anderes Echo bei der vorhergehenden Messung oder bei den vorhergehenden Messungen bewegt hat. Es werden also zwei Bewegungen oder Positionsverschiebungen zweier Echos zueinander in Bezug gesetzt und dieser Bezug fließt in die Entscheidung ein, ob ein Echo einer neu aufgezeichneten Echokurve einem bestimmten Track zuzuordnen ist oder nicht.

Gemäß der Erfindung ist der Mobilitätswert eines Echos ein Kennwert für die absolute Bewegung oder die relative Bewegung des Echos, welcher unter Berücksichtigung zeitgleich stattfindender Bewegungen oder Positonsverschiebungen oder einer anderweitigen Veränderung (beispielsweise einer Verbreiterung, Verschmälerung, Zunahme oder Abnahme der Amplitude) zumindest eines weiteren Echos ermittelt wird.

Unter einer Positionsverschiebung eines Echos einer Echokurve ist beispielsweise die Bewegung eines Echos zu verstehen, die beispielsweise während der Erfassung der Echokurve auftritt. Diese Bewegung mag beispielsweise mit Hilfe einer Dopplerauswertung der Echokurve erfasst werden können. Weiterhin kann diese Bewegung auch durch Differenzbildung berechnet werden, indem die Positionen des Echos oder der Echos identischen Reflexionsursprungs in zwei oder mehreren aufeinander folgenden Echokurven miteinander verglichen werden.

Gemäß der Erfindung erfolgt die Zuordnung des zweiten Echos zu dem bestimmten Track unter Verwendung einer Erwartungsfunktion, mit welcher eine Wahrscheinlichkeit für die korrekte Zuordnung des zweiten Echos zu dem bestimmten Track berechnet werden kann. Die Breite oder die Varianz der Erwartungsfunktion wird reduziert, falls die Positionsverschiebung des ersten Echos der ersten Echokurve Null oder unwesentlich ist, jedoch die Positionsverschiebung des weiteren Echos der ersten Echokurve ungleich Null bzw. deutlich größer als die Positionsverschiebung des ersten Echos ist.

Somit kann also die Breite oder die Varianz der Erwartungsfunktion für ein einem Track zuzuordnendes zweites Echo reduziert werden, wenn sich ein erstes Echo einer ersten Echokurve bei einer vorhergehenden Messung nicht bewegt hat, aber sich zumindest ein anderes Echo der ersten Echokurve bewegt hat.

Falls demnach sich dieses erste Echo über mehrere Messzyklen hinweg nicht bewegt, sehr wohl aber Bewegung anderer Echos stattfindet, wird die Breite der Erwartungsfunktion für den diesem stationären ersten Echo zugeordneten Track immer geringer.

Gemäß einem weiteren Aspekt der Erfindung handelt es sich bei der Erwartungsfunktion um eine Fensterfunktion, also eine Rechteckfunktion.

Auch kann es sich bei der Erwartungsfunktion beispielsweise um eine Gauß-ähnliche Funktion handeln.

Gemäß einem weiteren Aspekt der Erfindung wird die Breite oder die Varianz der Erwartungsfunktion vergrößert, falls die Positionsverschiebung des ersten Echos der ersten Echokurve ungleich Null ist oder um einen bestimmten Betrag von Null abweicht.

Gemäß einem weiteren Aspekt der Erfindung wird die Breite oder die Varianz der Erwartungsfunktion vergrößert, falls das zweite Echo einen Mindestabstand zu einem benachbarten Echo der zweiten Echokurve unterschreitet.

Nähert sich also das zweite Echo einem benachbarten Echo an (oder umgekehrt), können Breite oder Varianz der Erwartungsfunktion in einem höheren Maß vergrößert werden, als dies der Fall wäre, wenn keine Unterschreitung eines Mindestabstandes zu einem benachbarten Echo auftreten würde.

Gemäß einem weiteren Aspekt der Erfindung kann die Breite oder die Varianz der Enwartungsfunktion vergrößert werden, falls die Erwartungsfunktion mit einer entsprechenden Erwartungsfunktion des benachbarten Echos überlappt.

Gemäß einem weiteren Aspekt der Erfindung wird der Mobilitätswert des ersten Echos reduziert, falls sich das erste Echo in der vorhergehenden Messung nicht bewegt hat, sich jedoch zumindest ein anderes Echo bewegt hat. In anderen Worten wird der Mobilitätswert reduziert, falls die Positionsverschiebung des ersten Echos der ersten Echokurve Null ist, jedoch die Positionsverschiebung des weiteren Echos der ersten Echokurve ungleich Null ist.

Somit ist es möglich, sowohl den entsprechenden Mobilitätswert als auch die Breite oder Varianz der Erwartungsfunktion herabzusetzen. In anderen Worten werden also stationäre Echos "doppelt bestraft".

Gemäß einem weiteren Aspekt der Erfindung weisen die anfänglichen Erwartungsfunktionen identische Breite oder Varianz auf. In anderen Worten weisen die Erwartungsfunktionen, die den Echos und/oder den Tracks einer anfänglichen Echokurve zugeordnet sind, welche zu Beginn des Tracking-Verfahrens erfasst wurde, und unter deren Verwendung festgestellt wird, ob ein Echo einer später erfassten Echokurve einem bestimmten Track zuzuordnen ist, identische Breite oder Varianz auf.

Danach beginnt dann das Tracking-Verfahren und die Breiten oder Varianzen der Erwartungsfunktionen können entsprechend verringert oder vergrößert werden, je nachdem, wie sich die Echos (und damit die Tracks) im Vergleich zueinander verhalten.

Gemäß einem weiteren Aspekt der Erfindung ist die Verwendung eines oben und im Folgenden beschriebenen Füllstandmessgeräts zur Trennschichtmessung angegeben.

Gemäß einem weiteren Aspekt der Erfindung ist ein Verfahren gemäß Anspruch 8

Das Verfahren kann darüber hinaus auch zur Bestimmung einer Trennschichtposition verwendet werden und kann insbesondere die folgenden Schritte aufweisen:
Empfangen einer Echokurve; Bestimmung zumindest zweier verschiedener Echos in der Echokurve: Bestimmung eines Mobilitätswertes zumindest eines Echos der Echokurve, wobei hierzu zumindest ein Kennwert einer Positionsverschiebung dieses Echos und zumindest ein Kennwert einer Positionsverschiebung eines weiteren Echos verwendet werden: Durchführung eines Tracking-Verfahrens zur Gruppierung von Echos identischer Reflexionsstellen über mehrere Messzyklen hinweg, wobei hierzu zumindest ein Mobilitätswert eines in früheren Messzyklen erfassten Echos oder Tracks verwendet wird.

Gemäß einem weiteren Aspekt der Erfindung ist ein computerlesbares Medium angegeben, auf dem ein Programmelement gespeichert ist, das, wenn es auf einem Prozessor eines Füllstandmessgeräts ausgeführt wird, den Prozessor anleitet, die oben und im Folgenden beschriebenen Verfahrensschritte durchzuführen.

Dabei kann das Programmelement z. B. Teil einer Software sein, die auf einem Prozessor des Füllstandmessgeräts gespeichert ist. Der Prozessor kann dabei ebenso Gegenstand der Erfindung sein. Weiterhin umfasst dieses Ausführungsbeispiel der Erfindung ein Computerprogrammelement, welches schon von Anfang an die Erfindung verwendet, sowie auch ein Computerprogrammelement, welches durch eine Aktualisierung (Update) ein bestehendes Programm zur Verwendung der Erfindung veranlasst.

Das Verfahren ermöglicht die Implementierung eines robusten Trackings, insbesondere bei wechselnden Amplitudenverhältnissen und der Anwesenheit von Störechos in einem Behälter.

Im Folgenden werden mit Verweis auf die Figuren Ausführungsbeispiele der Erfindung beschrieben.

### Kurze Beschreibung der Figuren

Fig. 1 zeigt eine Vorrichtung zur Bestimmung der Lage einer Füllgutoberfläche in einem Behälter.
Fig. 2 zeigt eine Echosignalauswertung unter Anwendung eines Tracking-Verfahrens.
Fig. 3 zeigt eine Echosignalauswertung bei kleinem DK-Wert unter Anwendung eines Tracking-Verfahrens.
Fig. 4 zeigt eine Echosignalauswertung mit Bestimmung von Mobilitätswerten.
Fig. 5 zeigt Tracking mit Durchführung eines Gating-Verfahrens.
Fig. 6 zeigt eine Vorrichtung zur Bestimmung der Lage einer Füllgutoberfläche gemäß einem Ausführungsbeispiel der Erfindung.
Fig. 7 zeigt ein Verfahren zur Echosignalauswertung gemäß einem Ausführungsbeispiel der Erfindung.
Fig. 8 zeigt ein Flussdiagramm eines Verfahrens zur Echosignalauswertung gemäß einem Ausführungsbeispiel der Erfindung.
Fig. 9 zeigt ein Flussdiagramm eines Gating-Verfahrens gemäß einem Ausführungsbeispiel der Erfindung.
Fig. 10 zeigt Ergebnisse eines Trackings unter Berücksichtigung der Mobilität gemäß einem Ausführungsbeispiel der Erfindung.
Fig. 11A zeigt zwei Erwartungsfunktionen gemäß einem Ausführungsbeispiel der Erfindung.
Fig. 11B zeigt zwei Erwartungsfunktionen gemäß einem weiteren Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

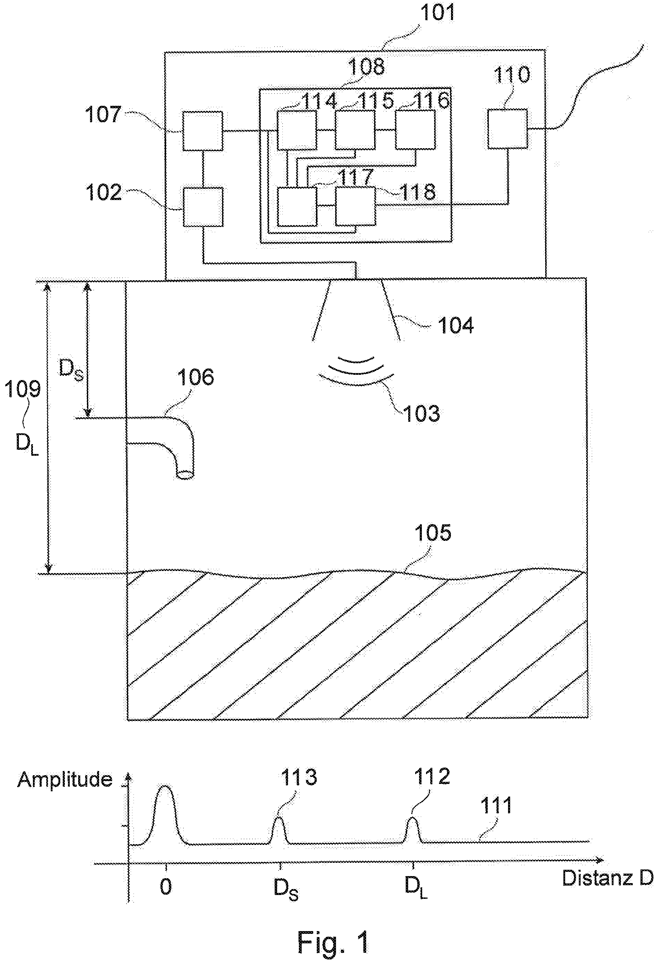

Fig.1 zeigt einen typischen Anwcndungsfall eines kommerziell verfügbaren Füllstandmessgerätes.

Das Füllstandmessgerät 101 erzeugt mit Hilfe einer Signalerzeugungseinheit 102 ein Messsignal 103 und strahlt dieses über eine geeignete Sende-/Empfangseinrichtung 104 oder Antenne 104 in Richtung des zu vermessenden Mediums 105 ab. Das Füllstandmessgerät selbst kann nach dem Ultraschall, Radar, Laser oder dem Prinzip der geführten Mikrowelle die Distanz zum Medium ermitteln. Als Messsignale 103 kommen dementsprechend sowohl Ultraschallwellen als auch elektromagnetische Wellen in Betracht.

Das Medium 105 reflektiert das auftreffende Messsignal zurück zum Füllstandmessgerät, wo dieses empfangen und verarbeitet wird. Gleichzeitig wird das abgestrahlte Signal auch von Behältereinbauten, beispielsweise einem Zuflussrohr 106 reflektiert.

Die über die Antenne 104 empfangenen Messsignale werden beispielsweise mit Hilfe der Signalerzeugungseinheit 102 in einen niederfrequenteren Zwischenfrequenzbereich transformiert, und anschließend an eine Analog-/Digital-Wandlereinheit 107 weitergeleitet. Die Analog-Digital-Wandlereinheit 107 digitalisiert die empfangene Echokurve und stellt die abgetasteten Amplitudenwerte einer Echosignalverarbcitungseinheit 108 zur Verfügung.

Die Echosignalverarbeitungseinheit 108 analysiert die übergebene Echokurve, und bestimmt unter Verwendung vorab bekannter Verfahren die Distanz *D_{L}* 109 zwischen dem Füllstandmessgerät und der Oberfläche des zu vermessenden Mediums 105. Die ermittelte Distanz *D_{L}* 109 wird an eine Ausgabeeinheit 110 weitergeleitet. Innerhalb der Ausgabeeinheit wird der ermittelte Distanzwert nach Vorgabe des Benutzers weiter aufbereitet, beispielsweise durch die Verrechnung von Offsets oder aber auch durch die Berücksichtigung von Linearisierungsfunktionen zur Kompensation nichtlinearer Behältergeometrien.

Eine Kernkomponente eines jeden Füllstandmessgerätes ist die Echosignalverarbeitungseinheit 108, welche auf der Grundlage einer digitalisierten Echokurve 111 die Distanz zur Füllgutoberfläche 105 ermittelt.

Die zu diesem Zweck der Echosignalverarbeitungseinheit 108 übergebene Echokurve 111 kann neben dem von der Füllgutoberfläche 105 hervorgerufenen Nutzecho 112 oder Füllgutecho 112 auch Echos von fest eingebauten Störstellen 106 aufweisen, welche nachfolgend als Störechos 113 bezeichnet werden. Die Präsenz solcher Störechos erschwert die Bestimmung der Entfernung zur Füllgutoberfläche, weshalb sich komplexe Verfahren zur Auswertung einer Echokurve etabliert haben. Die zur Durchführung solcher Verfahren notwendigen Einrichtungen sind ebenfalls in Fig. 1 dargestellt.

In einem ersten Verarbeitungsschritt wird die von der Analog-Digital-Wandlereinheit übergebene Echokurve 111 innerhalb der Echosignalverarbeitungseinheit 108 auf Echos hin untersucht. Dazu weist die Echosignalverarbeitungseinheit eine Echoextraktionseinrichtung 114 oder Echobestimmungseinrichtung 114 auf. Die in diesem Verarbeitungsblock zum Zuge kommenden Verfahren umfassen insbesondere Verfahren aus dem Bereich der schwellwertbasierenden Echoextraktion oder auch Verfahren auf Basis einer skalenbasierenden Echoextraktion. Nach Abarbeitung des Echoextraktionsverfahrens wird eine digitale Echoliste bereitgestellt, die vorzugsweise Angaben zu Anfang, Ort und Ende eines oder mehrerer in der Echokurve enthaltenen Echos beinhaltet.

Um die Zuverlässigkeit der Echosignalverarbeitung eines Füllstandmessgerätes weiter zu erhöhen, werden die gefundenen Echos innerhalb einer Trackingeinrichtung 115 in einen historischen Kontext gestellt. Die dabei verwendeten Verfahren können dem aktuellen Stand der Technik entstammen. So können beispielsweise Verfahren auf Basis des Munkres Algorithmus vorteilhaft eingesetzt werden. Innerhalb des Tracking wird insbesondere der Verlauf des Ortes eines Echos über mehrere Einzelmessungen hinweg verfolgt, und diese gesammelte Information in Form eines Tracks im Speicher repräsentiert. Die gesammelten Historieninformationen mehrerer Echos werden in Form einer oder mehrerer Tracklisten nach außen hin bereitgestellt.

Die Zuverlässigkeit der Identifikation der Füllgutreflexion kann durch die Auswertung der Mobilität einzelner Echos stark verbessert werden. Im Rahmen einer Mobilitätsberechnung wird im vorliegenden Fall festgestellt, dass das Füllgutecho 112 über viele Messungen hinweg in Bezug auf den Echoort (auch Echoposition genannt) variiert, wohingegen das Echo 113 der Reflexion am Zuflussrohr 106 in Bezug auf den Echoort nicht variiert. Die Mobilitätsauswerteeinrichtung 116 stellt die Mobilitätswerte nach außen hin zur Verfügung.

In einer Entscheidungseinrichtung 117 werden die Ergebnisse der Echoextraktionseinrichtung 114, der Trackingeinrichtung 115 sowie der Mobilitätsauswerteeinrichtung 116 zusammengeführt. Die Entscheidungseinrichtung bestimmt auf Basis der übergebenen Daten nach bekannten Verfahren dasjenige Echo der aktuellen Echokurve, welches von der Füllgutoberfläche erzeugt wurde.

Die Daten des identifizierten Füllgutechos werden an eine Vermessungseinrichtung 118 übergeben, welche die Aufgabe erfüllt, die Genauigkeit der Füllstandmessung weiter zu verbessern. Hierzu werden bekannte Verfahren eingesetzt, beispielsweise Verfahren aus dem Bereich der Echokurveninterpolation oder auch der Echokurvenapproximation.

Nachfolgend werden Verfahrensschritte, welche im Rahmen der vorliegenden Erfindung Anwendung finden, unter Verweis auf die Figuren näher beschrieben.

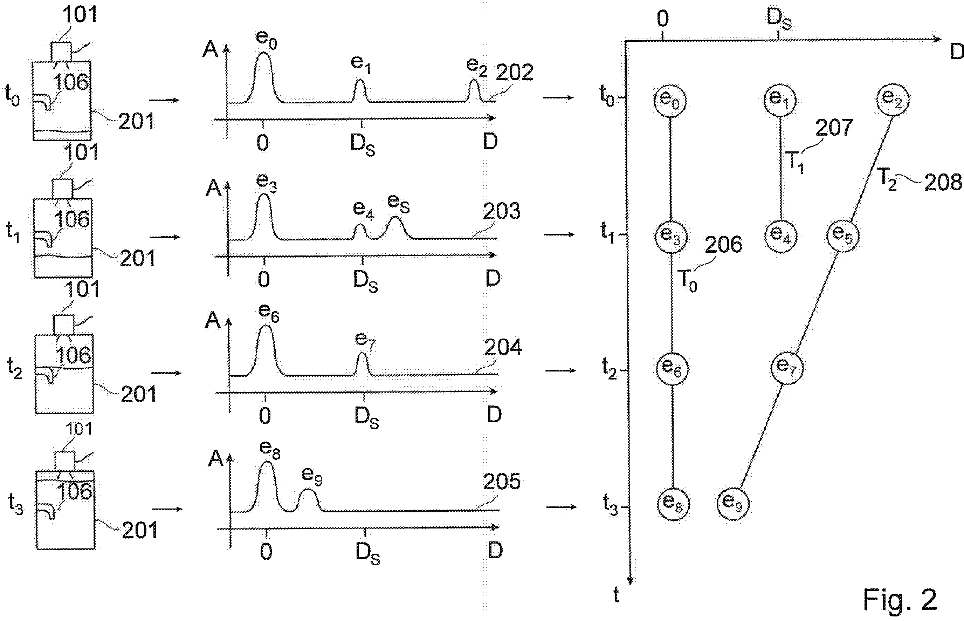

Werden in einem Füllstandmessgerät zyklische Messzyklen implementiert, so ergibt sich daraus eine Folge von empfangenen Echokurven, wie sie in Fig. 2 dargestellt wird. Beispielhaft sind vier unabhängige Messzyklen im zeitlichen Abstand von jeweils 5 Minuten dargestellt. Selbstverständlich sind aber auch deutlich schnellere Messzyklen, beispielsweise im Abstand von 1 Sekunde, realisierbar.

Das dargestellte Szenario zeigt die Verhältnisse beim Befüllen eines Behälters 201. Zu jedem der Zeitpunkte t0, t1, t2 und t3 wird ein Messzyklus des Füllstandmessgerätes 101 initiiert. Nach dem Empfangen der jeweiligen Echokurve 202, 203, 204, 205 wird diese mit bekannten Verfahren auf Echos hin untersucht. Um den Verlauf des Ortes oder der Position der einzelnen Echos über mehrere solcher Messzyklen hinweg verfolgen zu können, wird im weiteren Verfahrensablauf ein Tracking auf die gefundenen Echos durchgeführt.

Im vorliegenden Beispiel wird der Verlauf des Ortes der von der Antenne 104 selbst verursachten Echos e0, e3, e6 und e8 durch einen gemeinsamen Track T0 beschrieben. Zudem wird der Verlauf der vom Zuflussrohr 106 verursachten Echos e1 und e4 durch den zugehörigen Track T1 beschrieben. Der Verlauf der vom Füllgut 105 über mehrere Messzyklen hinweg verursachten Echos wird durch den Track T2 beschrieben, welcher aus den Echos e2, e5, e7 und c9 besteht.

Im Rahmen der Abarbeitung eines Trackingalgorithmus werden zum Zeitpunkt t0 die Tracks T0 und T2 initialisiert, und zu den Zeitpunkten t1, t2 und t3 fortlaufend erweitert. Weiterhin wird zum Zeitpunkt t0 der Track T1 initialisiert, und im Rahmen der Signalverarbeitungsprozedur zum Zeitpunkt t1 erweitert.

Die Darstellung des Verlaufes von Echos, welche eine gemeinsame Reflexionsstelle als Ursache haben, in Form eines Tracks ist in der Literatur beschrieben, und wird auch in anderen Bereichen, beispielsweise der Luftraumüberwachung, nutzbringend angewendet.

Die Zuordnung der aktuell erfassten Echos einer Echokurve zu den bereits in früheren Messzyklen erfassten Tracks wird im Wesentlichen dadurch erreicht, dass die Differenzen in Bezug auf den Ort und die Amplitude des Tracks und des jeweiligen Echos betrachtet werden, und nur Echos zu Tracks zugeordnet werden, wenn diese in etwa die gleiche Amplitude und Position wie die zuletzt bekannten korrespondierenden Kennwerte der Tracks aufweisen.

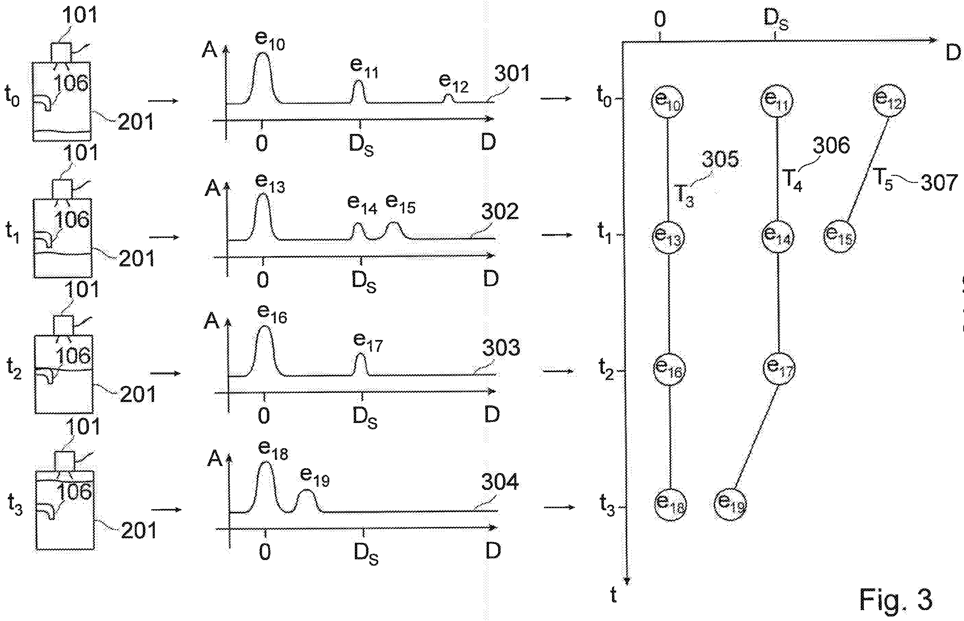

Fig. 3 verdeutlicht nun die Verhältnisse bei der Befüllung des gleichen Behälters mit einer Flüssigkeit, welche im Gegensatz zum Beispiel der Fig. 2 einen deutlich niedrigeren DK-Wert und damit eine deutlich niedrigere Reflektivität aufweist. Der DK-Wert beschreibt die Dielektrizitätskonstante eines Mediums und wird auch Permittivität genannt. Die zu den Zeitpunkten t0 bis t3 erfassten Echokurven 301, 302, 303 und 304 unterscheiden sich von den entsprechenden Echokurven der Fig. 2 hauptsächlich darin, dass die Echos c12, e15, e17 und e19 der Füllgutreflexion eine niedrigere Amplitude besitzen.

Anhand der Darstellung des zweiten Kurvenzugs 302 wird direkt ersichtlich, dass das Echo e15 der Füllgutoberfläche nahezu die gleiche Amplitude besitzt wie das Echo e14 des Zuflussrohres 106. Diese Konstellation hat nun zur Folge, dass ein konventionell durchgeführtes Trackingverfahren Schwierigkeiten mit der Zuordnung der Echos identischer Reflexionsstellen zu vorab bekannten Tracks hat. Entsprechend den oben skizzierten Ablaufschritten hat eine konventionelle Trackingeinrichtung 115 zum Zeitpunkt t t2 darüber zu entscheiden, ob das im Kurvenzug 303 identifizierte Echo e17 zum vorab bestehenden Track T3 305, T4 306 oder T5 307 zugeordnet werden soll. Aufgrund der großen Ortsdifferenz zwischen dem Track T3 und dem Echo e17 wird bei Abarbeitung konventioneller Trackingverfahren schnell klar, dass eine Zuordnung des Echos allenfalls zu Track T4 oder Track T5 erfolgen kann. In der einschlägigen Fachliteratur wird dieser Schritt einer "Vorabselektion" auch mit dem Begriff "Gating" umschrieben. Da die aktuellen Amplitudenwerte des Echos e14 (Track T4) und des Echos e15 (Track T5) nahezu identisch sind, kann die Entscheidung, zu welchem Track das Echo e17 zugeordnet werden soll, im vorliegenden Fall nur anhand der geringsten Ortsdifferenz zwischen dem Echo und dem jeweiligen Track gefällt werden. Infolgedessen werden das Echo e17 und nachfolgend auch das Echo e19 irrtümlicherweise zu Track T4 zugewiesen.

Da die Echos e17 und e19 jedoch von der Füllgutoberfläche verursacht worden sind, und der Track T4 die Echos des Zuflussrohres 106 gruppieren soll, liegt eine klassische Fehlzuordnung vor, welche die auf der Tracklistc aufbauenden weiteren Auswerteschritte massiv erschwert.

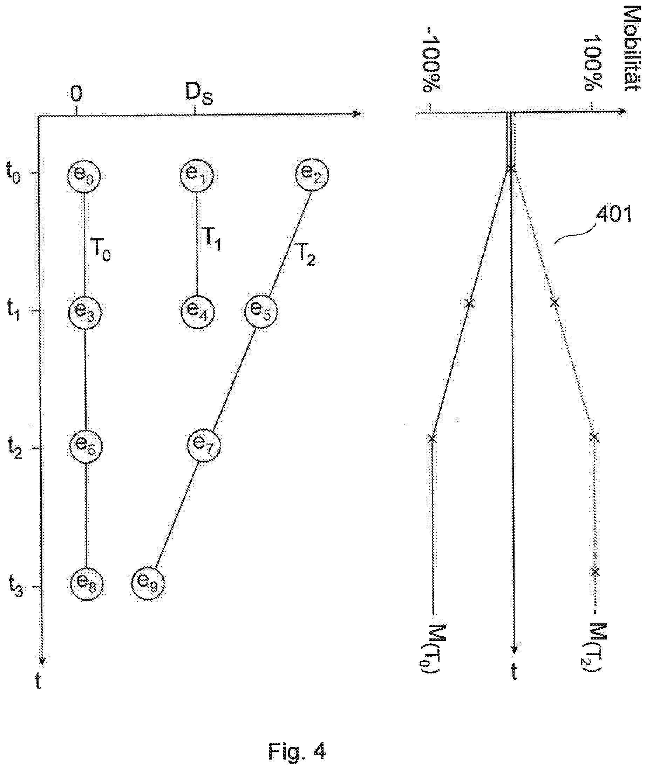

Fig. 4 zeigt einen wesentlichen Schritt bei der Auswertung der Tracks einer Trackliste. Nach bekannten Verfahren können die Tracks auf ihre Mobilität hin untersucht werden. Offenbarungen hierzu finden sich beispielsweise in EP 2 366 983 A1. Im Gegensatz zu einer klassischen Bewegungsanalyse, welche lediglich Aussagen darüber trifft, welcher Track und/oder welches Echo sich bewegt, erlaubt die Analyse der Mobilität auch Aussagen darüber, welcher Track eine erwiesene Stationarität aufweist. Die Darstellung der Fig. 4 verdeutlicht diesen Zusammenhang anhand der Trackliste der Fig. 2.

Zum Zeitpunkt t = t0 werden die Tracks T0, T1 und T2 initialisiert. Da diese Tracks allesamt nur ein einziges Echo aufweisen, und im vorliegenden Fall keine Dopplerauswertung erfolgen soll, kann zum entsprechenden Zeitpunkt keinerlei Aussage über die Mobilität der Tracks gemacht werden. Die Darstellung der Mobilitätswerte 401 zum Zeitpunkt t = t0 zeigt infolgedessen für alle Tracks eine Mobilität von 0 %. Es ist zu beachten, dass die Mobilität des Tracks T1 aus Gründen der Übersichtlichkeit hier nicht dargestellt ist. Zum Zeitpunkt t - t1 erkennt die Mobilitätsauswerteeinrichtung 116, dass sich der Track T2 im Zeitraum zwischen t0 und t1 bewegt hat, wohingegen der Track T0 im gleichen Zeitraum keinerlei Bewegung aufweist. Mit anderen Worten kann man sagen, dass die Mobilitätsauswerteeinrichtung (116) nach Abschluss des zum Zeitpunkt t=t1 initiierten Messzyklus des Füllstandmessgerätes feststellt, dass das Echo e3 des Tracks T0 eine Positionsverschiebung oder Bewegung von null oder nahezu null aufweist, und gleichzeitig das Echo e5 des Tracks T2 eine Positionsverschiebung oder Bewegung größer null aufweist. Es wird folglich die Mobilität M(T2) erhöht, wohingegen die Mobilität M(T0) erniedrigt wird. Die entsprechenden Stützstellen im Mobilitätsdiagramm (401) verdeutlichen zum Zeitpunkt t = t1, dass sich der Track T2 sicher bewegt (Mobilität > 0) wohingegen der Track T = T0 eine erwiesene Stationarität aufweist (Mobilität < 0). Mit anderen Worten kann man sagen, dass sich der Track T0 (und damit das ihm zugeordnete Echo e3) sicher nicht bewegt, da während dessen Verharren am Ort eine andere Bewegung erkannt worden ist. Zu den Zeitpunkten t - t2 und t = t3 verstärkt sich die gewonnene Erkenntnis nach obigem Schema. Es wird ersichtlich, dass die Mobilitätsanalyse durch eine fehlerhafte Trackliste gemäß dem Beispiel der Fig. 3 in ihrer Leistungsfähigkeit nachteilig beeinflusst werden kann.

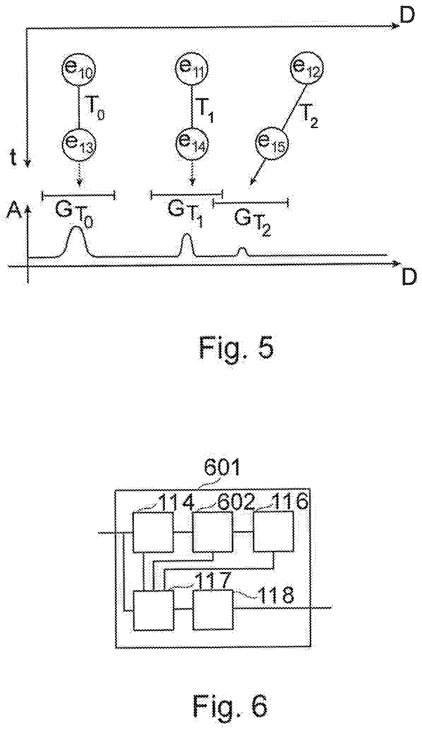

Fig. 5 verdeutlicht nochmals die innerhalb der Trackingeinrichtung 115 ablaufende Vorabselektion potentieller Nachfolgeechos eines Tracks, auch Gating genannt. Ein Track-Gatc oder Gate definiert einen Positionsbereich, in welchem potentielle Nachfolgeechos eines Tracks liegen müssen. In der praktischen Umsetzung fließt bei der Festlegung der Breite eines Gates a priori Wissen über die jeweilige Anwendung ein. So kann beispielsweise festgelegt werden, dass eine Füllstandänderung eine maximale Befüll- oder Entleergeschwindigkeit von 0,1 m pro Sekunde aufweisen mag. In Verbindung mit einer typischen Messwiederholfrequenz von 1 Sekunde zwischen zwei Messzyklen des Füllstandmessgerätes kann gefolgert werden, dass ein potentielles Nachfolgeecho eines Tracks in einem Bereich von +- 10 cm um den zuvor registrierten Ort des Tracks liegen muss. Alle Echos, welche in größerer Entfernung vom Track liegen, kommen als Nachfolger aus kausalen Gründen nicht mehr in Frage.

Fig. 5 zeigt ein Beispiel für eine Trackingsituation mit eingezeichneten Gates GT0, GT1, GT2 der Tracks T0, T1, T2. Es wird deutlich, dass die Bestimmung potentieller Nachfolger eines Tracks stark beschleunigt werden kann. Weiterhin wird aber auch ersichtlich, dass eine Fehlzuordnung - wie in Fig. 3 dargestellt - durch konventionelles Gating nicht verhindert werden kann, da beim Zusammenlaufen zweier Tracks sich die jeweiligen Gates überlagern, und es folglich von den Amplitudenverhältnissen abhängt, ob eine korrekte Zuordnung von Echos zu Tracks erfolgen kann oder nicht.

Die Erfindung stellt eine robuste Methode zum Tracking verschiedener Echos bereit. Insbesondere wird mit vorliegender Erfindung die Verbesserung bekannter Tracking-Algorithmen beim Überkreuzen zweier unterschiedlicher Tracks verbessert.

Fig. 6 zeigt eine erfindungsgemäß modifizierte Echosignalverarbeitungseinheit 601, welche sich von bisher bekannten Einheiten 108 durch eine modifizierte Trackingeinrichtung 602 unterscheidet.

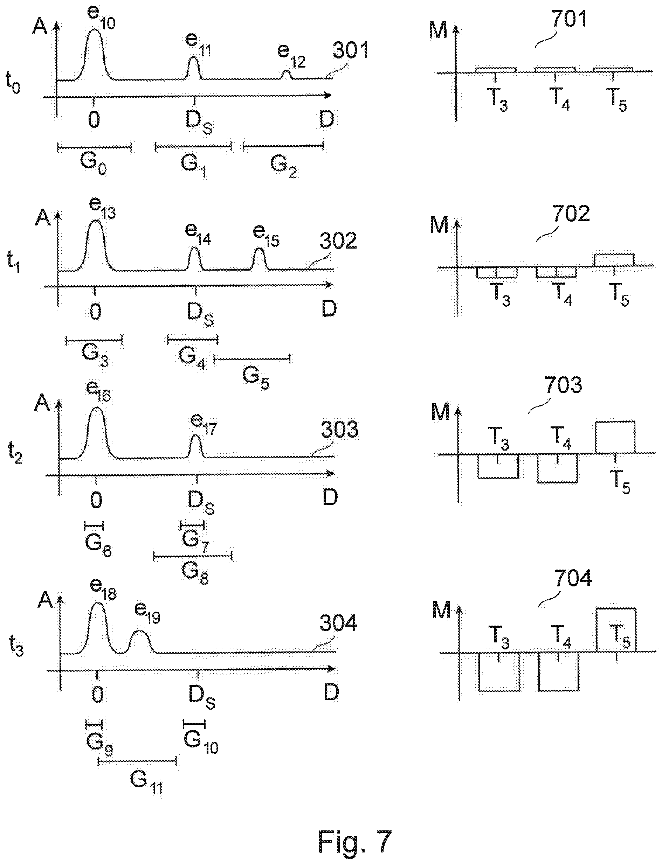

Fig. 7 zeigt den Ablauf einer Signalverarbeitungsprozedur mit einer modifizierten Signalverarbeitungseinheit 601. Die Darstellung zeigt die schon aus Fig. 3 bekannte Echokurvenfolge 301, 302, 303, 304, welche sich in Medien mit schlechtem DK-Wert ergibt. Weiterhin sind die zu den Tracks T3 (305), T4 (306) und T5 (307) aus Fig. 3 ermittelten Mobilitätswerte zu den Zeitpunkten t0, t1, t2 und t3 dargestellt. Zum Zeitpunkt t = t0 wird unter Verwendung von Echo e10 der Track T3 (305) initialisiert. Weiterhin werden mit den Echos e11 und e12 die Tracks T4 (306) sowie T5 (307) neu initialisiert. Die Mobilitätsauswerteeinrichtung 116 initialisiert die Mobilitätswerte der drei Tracks zu 0 (701), was bedeutet, dass keinerlei Aussage über stationäres Verhalten oder Bewegung gemacht werden können. Eine erfindungsgemäße Trackingeinrichtung legt zu diesem Zeitpunkt weiterhin die Gates G0, G1 und G2 als Erwartungsbereiche zur Fortsetzung der Tracks fest.

Zum Zeitpunkt t = t1 wird eine weitere Echokurve 302 erfasst. Die Tracks T3, T4 und T5 werden mit den Echos e13, e14 und e15 fortgesetzt. Weiterhin kann zu diesem Zeitpunkt eine erste Aussage über die Mobilität der Tracks gemacht werden. Das zugehörige Mobilitätsdiagramm 702 zeigt, dass Track T3 und T4 leicht stationäres Verhalten aufzeigen, wohingegen Track T5 sich bewegt. Mit anderen Worten kann man sagen, dass die Echos der Tracks T3, T4 oder auch die Tracks T3, T4 negative Mobilitätswerte aufweisen, wohingegen die Echos des Tracks T5 oder der Track T5 einen positiven Mobilitätswert aufweist. Die erfindungsgemäße Trackingeinrichtung berechnet die Breite der neuen Gates G3, G4 und G5 nun unter Verwendung der Mobilitätswerte der Tracks. Im vorliegenden Ausführungsbeispiel wird lediglich die negative Mobilität ausgewertet, was dazu führt, dass die Breite der Gates G3 und G4 im Vergleich zur Breite der Gates G0 und G1 verringert wird. Es mag auch möglich sein, die positive Mobilität zur Verbreiterung von Gates heranzuziehen.

Zum Zeitpunkt t - t2 wird eine weitere Echokurve empfangen, deren Echos el6 und e17 zum Fortsetzen der T3 und T4 entsprechend der Darstellung aus Fig. 3 verwendet werden mögen. Dem Mobilitätsdiagramm 703 kann entnommen werden, dass Track T3 und T4 eine weiter wachsende negative Mobilität aufweisen, was zur Folge hat, dass die Breite der zugehörigen Gates G6 und G7 erfindungsgemäß weiter reduziert werden muss. Die Breite des Gates G8. welches zu Track 5 gehört, bleibt hingegen auf dem ursprünglich vorgesehen Wert.

Es wird an dieser Stelle bereits ersichtlich, dass vom Gate G8 des Tracks T5 ein viel größerer Bereich erfasst wird als vom Gate G7 des Tracks T4. Mit vorliegender Maßnahme kann ein "Weg-Zuordnen" stationärer Tracks zu Echos mit größerer Positionsdifferenz wirksam verhindert werden.

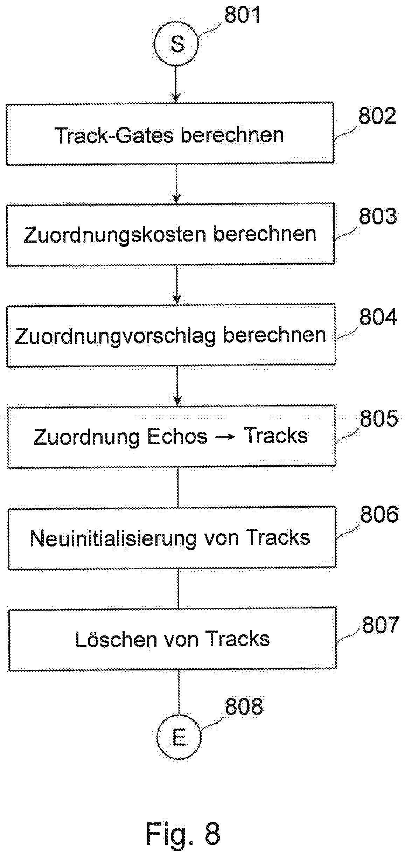

Das Ablaufdiagramm der Fig. 8 zeigt ein Beispiel für ein Tracking gemäß einem Ausführungsbeispiel der vorliegenden Erfindung. Das Verfahren kann insbesondere in einer erfindungsgemäßen Trackingeinrichtung 602 zum Einsatz kommen.

Das Trackingverfahren beginnt im Startzustand 801. Im Schritt 802 werden zunächst die Grenzen der Track-Gates ermittelt, woraufhin im Schritt 803 für diejenigen Echos, welche im Bereich des Track-Gates eines Tracks liegen, die Kosten der Zuordnung des jeweiligen Echos zum Track berechnet werden. Die Kosten einer Zuordnung geben ein Maß dafür an, wie gut ein Echo zu einem Track passt. Die Kosten können nach bekannten Verfahren berechnet werden, wobei insbesondere große Amplitudendifferenzen oder große Ortsdifferenzen zu hohen Kosten führen können.

WO2009/037000 beschreibt entsprechende Verfahren. Im Schritt 804 wird vorzugsweise durch globale Kostenminimierungsalgorithmen ein Zuordnungsvorschlag für die Fortsetzung der Tracks mit den jeweiligen Echos berechnet. Offenbarungen hierzu finden sich ebenfalls in WO2009/037000. Im Schritt 805 werden die Echos formal in die Trackliste übernommen. Die Schritte 806 und 807 dienen der Neuinitialisierung von Tracks mit nicht zugeordneten Echos bzw. dem Löschen von Tracks, welche sicher nicht mehr fortgesetzt werden können, beispielsweise nach entsprechend langer Zeit ohne Zuordnung. Das Tracking-Verfahren endet im Schritt 808.

Im vorliegenden Ausführungsbeispiel der Fig. 7 werden die Mobilitätswerte der einzelnen Tracks dazu verwendet, im Schritt 802 erfindungsgemäß modifizierte Gates zu den Tracks zu ermitteln.

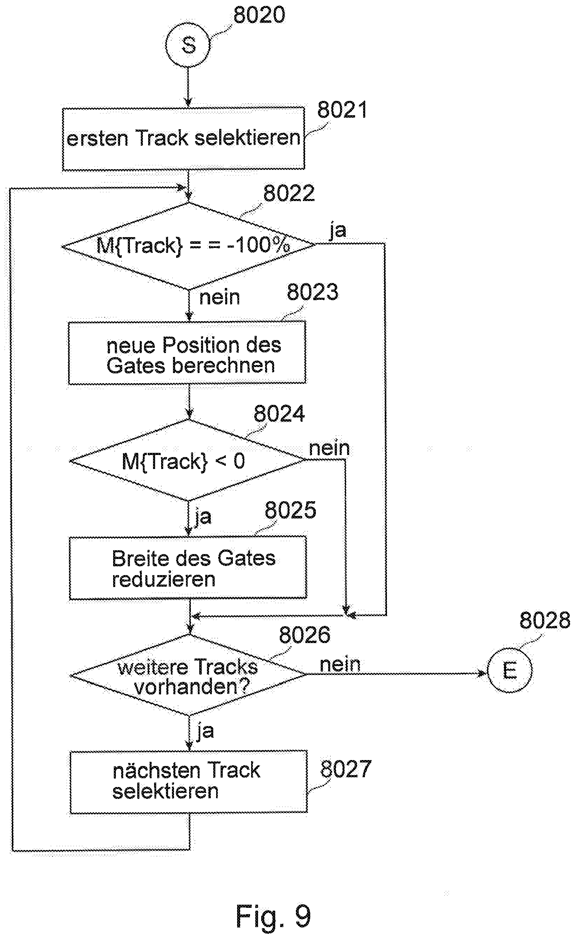

Fig. 9 zeigt im Detail die Abfolge zum Gating nach vorliegendem Ausführungsbeispiel.

Das Verfahren beginnt im Schritt 8020. Im Schritt 8021 wird zunächst der erste Track der Trackliste selektiert. Unter Verwendung der von der Mobilitätsauswerteeinrichtung 116 bereitgestellten Mobilitätsliste wird im Schritt 8022 nun überprüft, ob der Track sicher stationär ist, d.h. ob seine Mobilität identisch -100% ist. Falls dem so ist, wird die Aktualisierung der Gates ausgesetzt, und direkt zum nächsten Track übergegangen. Andernfalls wird im Schritt 8023 die neue Position des Gates unter Berücksichtigung der parametrierten oder fest einprogrammierten Gatebreiten ermittelt. Im Schritt 8024 wird überprüft, ob der Mobilitätswert des aktuellen Tracks zumindest auf stationäre Tendenzen hinweist. Ist dies der Fall, wird im Schritt S025 erfindungsgemäß die Breite des Gates nachträglich reduziert. Das Verfallen endet, wenn die Gates eines jeden Tracks berechnet wurden, im Endzustand 8028.

Es sei an dieser Stelle darauf hingewiesen, dass die Berücksichtigung der Mobilitätswerte im Tracking durch Verringerung der Breite eines oder mehrerer Gates nur eine bevorzugte Ausführungsvariante darstellt. Weiterhin sind verschiedene andere Formen einer erfindungsgemäßen Verwendung von Mobilitätswenen innerhalb einer Trackingcinrichtung (602) denkbar. So kann beispielsweise die Berechnung der Gates auf klassische Art und Weise erfolgen, jedoch bei der Berechnung der Zuordnungskosten im Schritt (803) dafür gesorgt werden, dass die Mobilitätswerte einzelne Zuordnungen gezielt unterbinden. Auch ist es denkbar, während der Ermittlung des Zuordnungsvorschlags im Schritt 804 gezielt einzelne Zuweisungen zu verhindern. Weiterhin mag es auch möglich sein, erst bei der Zuordnung von Echos zu Tracks im Schritt (805) eine Berücksichtigung von Mobilitätswerten derart zu implementieren, dass Tracks mit erwiesener Stationarität nur mit auf den Ort oder die Position bezogen passenden Echos fortgesetzt werden.

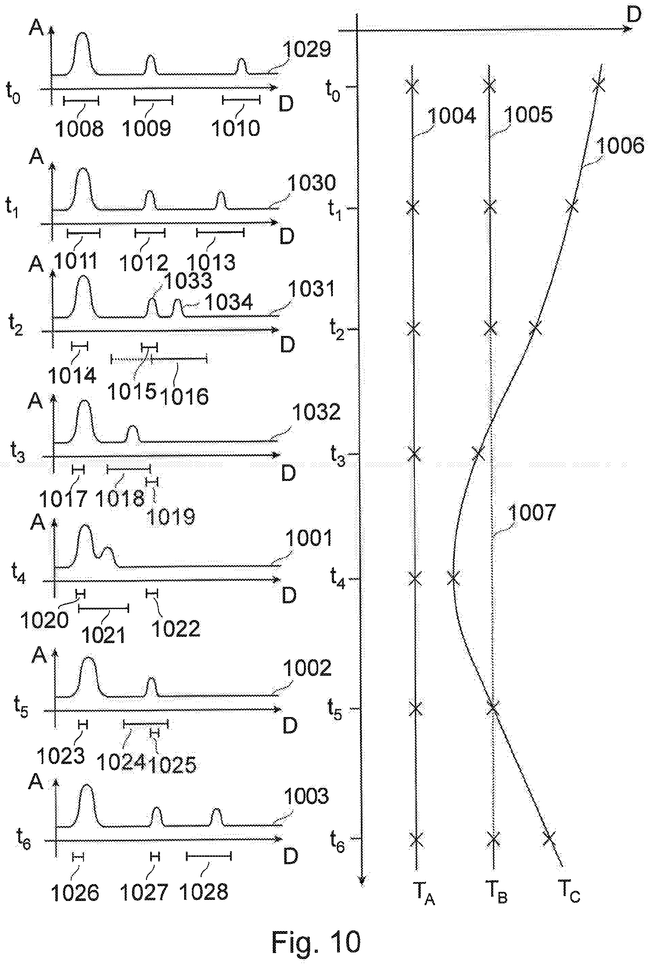

Fig. 10 zeigt anhand des Beispiels der Kurvenfolge aus Fig. 3 den erfindungsgemäßen Ablauf eines Trackingverfahrens. Die Echokurven 1029, 1030, 1031. 1032 und 1001 zeigen zunächst die Befüllung des Behälters 201. Aufgrund der mit zunehmender Sicherheit erkannten Mobilität des Tracks TC 1006 und der daraus folgenden Stationarität der Tracks TA 1004 und TB 1005,1007 werden die Gates der Tracks TA und TB 1008, 1009, 1011. 1012, 1014, 1015. 1017, 1019, 1020, 1022, 1023. 1025, 1026, 1027 in Bezug auf ihre Breite fortlaufend reduziert, wobei es zweckmäßig ist, eine vorgebbare Mindestbreite nicht zu unterschreiten. Die Gates 1010, 1013. 1016, 1018, 1021, 1024, 1028 des sicher mobil erkannten Tracks TC 1006 bleiben über die gesamte Zeit hinweg auf ihrer ursprünglichen Breite. Dies hat insbesondere im Messzyklus zum Zeitpunkt t = t3 zur Folge, dass lediglich Track TC fortgesetzt werden kann. da das Gate 1015 des Tracks TB eine fehlerhafte Zuordnung sicher unterbindet. Der Track TB wechselt in den unsichtbaren Zustand 1007, und wird erst im Messzyklus zum Zeitpunkt t = t6 weiter fortgesetzt.

Figur 10 zeigt eine weitere Ausführungsvariante eines erfindungsgemäßen Verfahrens. Im vorliegenden Beispiel kann beim Zusammentreffen zweier Echos (Kurvenzug 303) die Breite oder die Varianz einer Gatingfunktion oder einer Erwartungsfunktion vergrößert werden, wenn zwei Echos (1033, 1034) einen vorgegebenen Mindestabstand unterschreiten. Die gestrichelte dargestellte Variante deutet die Verbreiterung des Gates 1016 zum Zeitpunkt t=t2 an, welche insbesondere zu einer sicheren Identifikation des Füllgutechos beim Durchwandern des Bereiches eines Störechos verwendet werden kann.

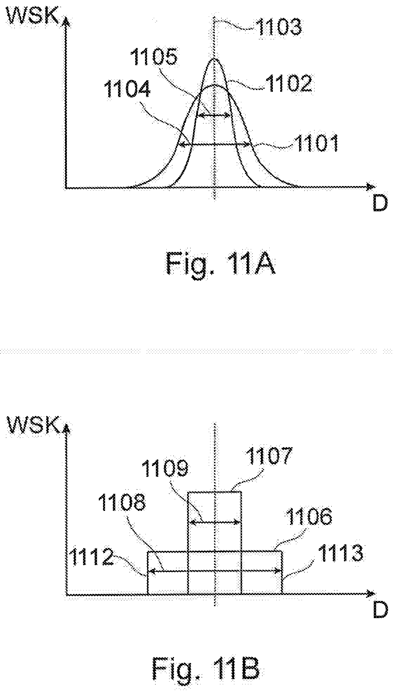

Fig. 11A zeigt zwei Erwartungsfunktionen 1101, 1102 gemäß einem Ausführungsbeispiel der Erfindung. Die Querachse 1110 bezeichnet hierbei die Distanz zum Füllgut und die Hochachsc 1111 bezeichnet die Wahrscheinlichkeit dafür, dass ein Echo, welches eine bestimmte Distanz zum Füllstandmessgerät aufweist, einem bestimmten Track zuzuordnen ist.

Die beiden Erwartungsfunktionen 1101 und 1102 sind beispielsweise Gauß-förmig und weisen verschiedene Breiten auf. So ist die flachere Erwartungsfunktion 1101 breiter (siehe Pfeil 1104) als die etwas steilere Erwartungsfunktion 1102 (siehe Pfeil 1105).

Als "Breite" der Erwartungsfunktion kann z. B. der Wert herangezogen werden, der die Breite der Funktion bei halber Höhe darstellt.

Fig. 11B zeigt zwei rechteckige Erwartungsfunktionen 1106, 1107, auch Fensterfunktionen genannt.

Hier ist die Breite der Funktion gleichzusetzen mit dein Abstand des ansteigenden linken Schenkels 1112 zum abfallenden, rechten Schenkel 1113.

Die rechteckigen Erwartungsfunktionen 1106, 1107 können beispielsweise zur Durchführung eines klassischen oder eines erfindungsgemäßen Gating-Verfahrens verwendet werden.

Andere Erwartungsfunktionen 1101, 1102 können beispielsweise zur erfindungsgemäßen Modifikation eines Verfahrens zur Kostenermittlung für die Zuordnung von Echos zu Tracks verwendet werden.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandmessgerät (101) zur Bestimmung von Mobilitätswerten von Echos einer Echokurve und zur Durchführung eines Tracking-Verfahrens unter Berücksichtigung zumindest eines der Mobilitätswerte, wobei ein Mobilitätswert eines Echos ein Kennwert für die Bewegung des Echos ist, welcher unter Berücksichtigung zeitgleich stattfindender Bewegungen oder einer anderweitigen Veränderung zumindest eines weiteren Echos ermittelt wird, das Füllstandmessgerät aufweisend:
eine Recheneinheit (108) zur Bestimmung eines ersten Mobilitätswertes eines ersten Echos einer ersten Echokurve unter Berücksichtigung einer Positionsverschiebung des ersten Echos und einer Positionsverschiebung eines weiteren Echos der ersten Echokurve;
wobei die Recheneinheit (108) weiterhin zur Durchführung eines Tracking-Verfahrens zur Gruppierung von Echos zeitlich aufeinanderfolgender Echokurven, die auf identische Reflexionsstellen zurückzuführen sind, ausgeführt ist;
wobei die Recheneinheit (108) ein zweites Echo einer nach der ersten Echokurve erfassten zweiten Echokurve unter Berücksichtigung zumindest des ersten Mobilitätswertes einem bestimmten Track zuordnet;
wobei die Zuordnung des zweiten Echos zu dem bestimmten Track unter Verwendung einer Erwartungsfunktion erfolgt, mit welcher eine Wahrscheinlichkeit für die korrekte Zuordnung des zweiten Echos zu dem bestimmten Track berechnet werden kann;
wobei eine Breite oder eine Varianz der Erwartungsfunktion reduziert wird, falls die Positionsverschiebung des ersten Echos der ersten Echokurve null ist, jedoch die Positionsverschiebung des weiteren Echos der ersten Echokurve ungleich null ist; und
wobei die Breite oder die Varianz der Erwartungsfunktion vergrößert wird, falls die Positionsverschiebung des ersten Echos der ersten Echokurve ungleich null ist.

2. Füllstandmessgerät nach Anspruch 1,
wobei es sich bei der Erwartungsfunktion um eine Fensterfunktion handelt.

3. Füllstandmessgerät nach einem der voranstehenden Ansprüche, wobei die Breite oder die Varianz der Erwartungsfunktion vergrößert wird, falls das zweite Echo einen Mindestabstand zu einem benachbarten Echo der zweiten Echokurve unterschreitet.

4. Füllstandmessgerät nach Anspruch 3, wobei die Breite oder die Varianz der Erwartungsfunktion vergrößert wird, falls die Erwartungsfunktion mit einer entsprechenden Erwartungsfunktion des benachbarten Echos überlappt.

5. Füllstandmessgerät nach einem der vorhergehenden Ansprüche, wobei ein Mobilitätswert des zweiten Echos reduziert wird, falls die Positionsverschiebung des ersten Echos der ersten Echokurve null ist, jedoch die Positionsverschiebung des weiteren Echos der ersten Echokurve ungleich null ist.

6. Füllstandmessgerät nach einem der vorhergehenden Ansprüche, wobei die Erwartungsfunktionen, die den Echos einer anfänglichen Echokurve zugeordnet sind, welche zu Beginn des Tracking-Verfahrens erfasst wurde, und unter deren Verwendung festgestellt wird, ob ein Echo einer später erfassten Echokurve einem bestimmten Track zuzuordnen ist, identische Breiten oder Varianzen aufweisen.

7. Verwendung eines Füllstandmessgeräts nach einem der vorhergehenden Ansprüche zur Trennschichtmessung.

8. Verfahren zur Bestimmung von Mobilitätswerten von Echos einer Echokurve und zur Durchführung eines Tracking-Verfahrens unter Berücksichtigung zumindest eines der Mobilitätswerte wobei ein Mobilitätswert eines Echos ein Kennwert für die Bewegung des Echos ist, welcher unter Berücksichtigung zeitgleich stattfindender Bewegungen oder einer anderweitigen Veränderung zumindest eines weiteren Echos ermittelt wird, das Verfahren aufweisend die Schritte:
Bestimmen eines ersten Mobilitätswertes eines ersten Echos einer ersten Echokurve unter Berücksichtigung einer Positionsverschiebung des ersten Echos und einer Positionsverschiebung eines weiteren Echos der ersten Echokurve;
Durchführen eines Tracking-Verfahrens zur Gruppierung von Echos zeitlich aufeinanderfolgender Echokurven, die auf identische Reflexionsstellen zurückzuführen sind;
Zuordnen eines zweiten Echos einer nach der ersten Echokurve erfassten zweiten Echokurve unter Berücksichtigung zumindest des ersten Mobilitätswertes einem bestimmten Track;
wobei die Zuordnung des zweiten Echos zu dem bestimmten Track unter Verwendung einer Erwartungsfunktion erfolgt, mit welcher eine Wahrscheinlichkeit für die korrekte Zuordnung des zweiten Echos zu dem bestimmten Track berechnet werden kann;
wobei eine Breite oder eine Varianz der Erwartungsfunktion reduziert wird, falls die Positionsverschiebung des ersten Echos der ersten Echokurve null ist, jedoch die Positionsverschiebung des weiteren Echos der ersten Echokurve ungleich null ist; und
wobei die Breite oder die Varianz der Erwartungsfunktion vergrößert wird, falls die Positionsverschiebung des ersten Echos der ersten Echokurve ungleich null ist.

9. Programmelement, das, wenn es auf einem Prozessor eines Füllstandmessgeräts ausgeführt wird, den Prozessor anleitet, das Verfahren nach Anspruch 8 durchzuführen.

10. Computerlesbares Medium, auf dem ein Programmelement gespeichert ist, das, wenn es auf einem Prozessor eines Füllstandmessgeräts ausgeführt wird, den Prozessor anleitet, das Verfahren nach Anspruch 8 durchzuführen.

## Claims

1. A level measuring device (101) for determining mobility values of echoes of an echo curve and for carrying out a tracking method taking into account at least one of the mobility values, wherein a mobility value of an echo is a parameter for the movement of the echo, which is determined with consideration of simultaneously occurring movements or another change of at least one other echo, the level measuring device comprising:
a calculation unit (108) for determining a first mobility value of a first echo of a first echo curve taking into account a positional displacement of the first echo and a positional displacement of a further echo of the first echo curve,
wherein the calculation unit (108) is further configured to perform a tracking method for grouping echoes of temporally successive echo curves that are caused by identical reflection points;
wherein the calculation unit (108) assigns a second echo of a second echo curve detected after the first echo curve to a certain track, taking into account at least the first mobility value;
wherein the assignment of the second echo to the certain track is done using an expectancy function, with which a probability for the correct assignment of the second echo to the certain track can be calculated;
wherein a width or a variance of the expectancy function is reduced if the positional displacement of the first echo of the first echo curve is zero but the positional displacement of the further echo of the first echo curve is not zero; and
wherein the width or variance of the expectancy function is increased if the positional displacement of the first echo of the first echo curve is not zero.

2. The level measuring device according to claim 1,
wherein the expectancy function is a window function.

3. The level measuring device according to any one of the preceding claims,
wherein the width or variance of the expectancy function is increased if the second echo falls short of a minimum distance to an adjacent echo of the second echo curve.

4. The level measuring device according to claim 3,
wherein the width or variance of the expectancy function is increased if the expectancy function overlaps with a corresponding expectancy function of the adjacent echo.

5. The level measuring device according to any one of the preceding claims,
wherein a mobility value of the second echo is reduced if the positional displacement of the first echo of the first echo curve is zero, but the positional displacement of the further echo of the first echo curve is not zero.

6. The level measuring device according to any one of the preceding claims,
wherein the expectancy functions allocated to the echoes of an initial echo curve that is acquired at the beginning of the tracking method and by means of which it is determined whether an echo of a subsequently acquired echo curve needs to be assigned to a certain track have identical widths or variances

7. Use of a level measuring device according to any one of the preceding claims for interfacial level measurements.

8. A method for determining mobility values of echoes of an echo curve and for carrying out a tracking method taking into account at least one of the mobility values, wherein a mobility value of an echo is a parameter for the movement of the echo, which is determined with consideration of simultaneously occurring movements or another change of at least one other echo, the method comprising the steps
determining a first mobility value of a first echo of a first echo curve, taking into account a positional displacement of the first echo and a positional displacement of another echo of the first echo curve,
performing a tracking method to group echoes of successive echo curves that are caused by identical reflection points;
allocating a second echo of a second echo curve acquired after the first echo curve to a certain track, taking into account at least the first mobility value;
wherein the allocation of the second echo to the certain track is done using an expectancy function, with which a probability for the correct allocation of the second echo to the certain track can be calculated;
wherein a width or a variance of the expectancy function is reduced if the positional displacement of the first echo of the first echo curve is zero but the positional displacement of the further echo of the first echo curve is not zero; and
wherein the width or variance of the expectancy function is increased if the positional disaplacement of the first echo of the first echo curve is not zero.

9. A program element which, when executed on a processor of a level measuring device, instructs the processor to perform the method according to claim 8.

10. A computer-readable medium having stored thereon a program element which, when executed on a processor of a level measuring device, instructs the processor to perform the method of claim 8.

## Revendications

1. Appareil de mesure de niveau de remplissage (101) destiné à déterminer des valeurs de mobilité d'échos d'une courbe d'échos et à exécuter un procédé de suivi en fonction d'au moins une des valeurs de mobilité, une valeur de mobilité d'un écho étant une valeur caractéristique pour le déplacement de l'écho, qui est déterminée en tenant compte de déplacements s'effectuant simultanément ou d'une autre modification d'au moins un autre écho, l'appareil de mesure de niveau de remplissage comportant :
une unité de calcul (108) destinée à déterminer une première valeur de mobilité d'un premier écho d'une première courbe d'échos en tenant compte d'un décalage de position du premier écho et d'un décalage de position d'un autre écho de la première courbe d'échos ;
l'unité de calcul (108) étant en outre conçue pour exécuter un procédé de suivi pour le groupement d'échos de courbes d'échos successives dans le temps, qui sont à attribuer à des points de réflexion identiques ;
l'unité de calcul (108) associant un second écho d'une seconde courbe d'échos détectée après la première courbe d'échos à une piste de suivi donnée, en tenant compte au moins de la première valeur de mobilité ;
l'association du second écho à la piste de suivi donnée étant effectuée au moyen d'une fonction d'espérance, avec laquelle une probabilité de l'association correcte du second écho à la piste de suivi donnée peut être calculée ;
une largeur ou une variance de la fonction d'espérance étant réduite si le décalage de position du premier écho de la première courbe d'échos est nul, mais que le décalage de position de l'autre écho de la première courbe d'échos n'est pas nul ; et
la largeur ou la variance de la fonction d'espérance étant augmentée si le décalage de position du premier écho de la première courbe d'échos n'est pas nul.

2. Appareil de mesure de niveau de remplissage selon la revendication 1,
dans lequel la fonction d'espérance est un fenêtrage.

3. Appareil de mesure de niveau de remplissage selon l'une des revendications précédentes,
dans lequel la largeur ou la variance de la fonction d'espérance est augmentée si le second écho passe en dessous d'une distance minimale par rapport à un écho voisin de la seconde courbe d'échos.

4. Appareil de mesure de niveau de remplissage selon la revendication 3,
dans lequel la largeur ou la variance de la fonction d'espérance est augmentée si la fonction d'espérance se chevauche avec une fonction d'espérance correspondante de l'écho voisin.

5. Appareil de mesure de niveau de remplissage selon l'une des revendications précédentes,
dans lequel une valeur de mobilité du second écho est réduite si le décalage de position du premier écho de la première courbe d'échos est nul, mais que le décalage de position de l'autre écho de la première courbe d'échos n'est pas nul.

6. Appareil de mesure de niveau de remplissage selon l'une des revendications précédentes, dans lequel
les fonctions d'espérance, qui sont associées aux échos d'une courbe d'échos initiale, qui a été détectée au début du procédé de suivi et dont l'utilisation permet de constater si un écho d'une courbe d'échos détectée ultérieurement est à associer à une piste de suivi donnée, présentent des largeurs ou variances identiques.

7. Utilisation d'un appareil de mesure de niveau de remplissage selon l'une des revendications précédentes pour la mesure d'interface.

8. Procédé destiné à déterminer des valeurs de mobilité d'échos d'une courbe d'échos et à exécuter un procédé de suivi en fonction d'au moins une des valeurs de mobilité, une valeur de mobilité d'un écho étant une valeur caractéristique pour le déplacement de l'écho, qui est déterminée en tenant compte de déplacements s'effectuant simultanément ou d'une autre modification d'au moins un autre écho, le procédé comportant les étapes de :
détermination d'une première valeur de mobilité d'un premier écho d'une première courbe d'échos en tenant compte d'un décalage de position du premier écho et d'un décalage de position d'un autre écho de la première courbe d'échos ;
exécution d'un procédé de suivi pour le groupement d'échos de courbes d'échos successives dans le temps, qui sont à attribuer à des points de réflexion identiques ;
association d'un second écho d'une seconde courbe d'échos détectée après la première courbe d'échos à une piste de suivi donnée, en tenant compte au moins de la première valeur de mobilité ;
l'association du second écho à la piste de suivi donnée étant effectuée au moyen d'une fonction d'espérance, avec laquelle une probabilité de l'association correcte du second écho à la piste de suivi donnée peut être calculée ;
une largeur ou une variance de la fonction d'espérance étant réduite si le décalage de position du premier écho de la première courbe d'échos est nul, mais que le décalage de position de l'autre écho de la première courbe d'échos n'est pas nul ; et
la largeur ou la variance de la fonction d'espérance étant augmentée si le décalage de position du premier écho de la première courbe d'échos n'est pas nul.

9. Élément de programme qui, lorsqu'il est exécuté sur un processeur d'un appareil de mesure de niveau de remplissage, amène le processeur à exécuter le procédé selon la revendication 8.

10. Support lisible par ordinateur sur lequel est enregistré un élément de programme qui, lorsqu'il est exécuté sur un processeur d'un appareil de mesure de niveau de remplissage, amène le processeur à exécuter le procédé selon la revendication 8.
